# EUROPÄISCHE PATENTANMELDUNG

(11) **EP 1 315 221 A2**
(43) Veröffentlichungstag der Anmeldung: **28.05.2003**
(21) Anmeldenummer: 02026398.4
(22) Anmeldetag: 26.11.2002
(51) Int. Cl.: H01M 4/92, B01J 35/00, B01J 13/00, B01J 23/40, C01B 15/023, C01B 15/029

(54) **Oxidationsunempfindliche polymerstabilisierte Edelmetallkoloide**

(30) Priorität: 26.11.2001 DE 10157916
(71) Anmelder: BASF AKTIENGESELLSCHAFT, 67056 Ludwigshafen (DE)
(72) Erfinder: Bender, Michael, Dr., 67063 Ludwigshafen (DE); Wessel, Helge, Dr., 68167 Mannheim (DE)
(74) Vertreter: Isenbruck, Günter, Dr.

(57) **Zusammenfassung**

Gegenstand der Erfindung ist ein oxidationsunempfindliches polymerstabilisiertes Edelmetallkolloid aus Edelmetallpartikeln, die an ihrer Oberfläche ein oder mehrere oxidationsunempfindliche, Sulfonsäuregruppen oder Phosphonsäuregruppen enthaltende Polymere koordinativ gebunden aufweisen, wobei die Polymere ausgewählt sind aus der Gruppe bestehend aus sulfoniertem, teilfluoriertem oder fluoriertem Polystyrol, sulfonierten, teilfluorierten oder fluorierten Alkylen/Styrol-Copolymeren, sulfonierten, perfluorierten Alkylen/Alkylenoxid-Copolymeren, sulfoniertem Polystyrol, sulfonierten Polyarylenoxiden, sulfonierten Polyarylenethersulfonen, sulfonierten Polyarylenetherketonen, sulfoniertem Polyphenylen, sulfoniertem Polyphenylensulfid und phosphonierten Arylenoxiden und phosphonierten Polybenzimidazolen, wobei die genannten Polymere weitere Substituenten aufweisen können.

## Beschreibung

Die Erfindung betrifft oxidationsunempfindliche polymerstabilisierte Edelmetallkolloide.

Metallkolloide sind Systeme, in denen Metallteilchen mit einem Durchmesser in der Größenordnung von etwa 1 nm bis 1 um vorliegen. Das extrem feinteilige Metall selbst wird als kolloidales Metall bezeichnet. Es kann in Substanz, in einer kontinuierlichen Phase dispergiert oder an einer Phasengrenzfläche adsorbiert vorliegen. Seine Dispersion in einem Lösungsmittel wird als Metallkolloid-Lösung bezeichnet.

Die Herstellung von Metallkolloiden ist seit langem bekannt. Üblicherweise werden Metallsalze in Lösung in Gegenwart von Stabilisatoren zum Metall reduziert. Bei den Stabilisatoren handelt es sich um Substanzen, die in der Lage sind, koordinative Bindungen zu dem Metall einzugehen und die gebildeten Metallpartikel dadurch vor Agglomeration zu schützen. Eigenschaften wie Größe und Größenverteilung der gebildeten Kolloidteilchen können durch Wahl des Reduktionsmittels, des Schutzliganden und dessen Menge, des Lösungsmittels sowie des in dem Metallsalz vorliegenden Anions beeinflusst werden.

DE-A 44 12 463 offenbart die Herstellung von Palladiumkolloid-Lösungen durch Reduktion von Palladiumsalzen mit einer Reihe von Reduktionsmitteln wie Phosphiten, Hypophosphiten, Boranen, Ascorbinsäure, Hydrazin und Formaldehyd in Gegenwart von polymeren Stabilisatoren wie Polyvinylpyrrolidon, Polyvinylpyridin, Polyvinylmethylketon, Polyvinylalkohol, Polyvinylacetat, Polyacrylat, Alkyl- und Hydroxyalkylcellulose.

H. Bönnemann et al., angewandte Chemie 103 (1991), Seite 1344 bis 1346 beschreiben die Herstellung von Metallkolloiden von Elementen der Gruppen 6 bis 11 in organischer Phase. Die Metallsalze werden in THF suspendiert und mit Tetraalkylammoniumhydrotriorganoboraten reduziert. Das dabei gebildete Ammoniumsalz wirkt als Schutzkolloid für die gebildeten Metallpartikel, so dass der Zusatz externer Stabilisatoren entfällt.

DE-A 196 30 581 offenbart ein Verfahren zur Herstellung von Lösungsmittel-stabilisierten Übergangsmetallkolloiden mit einer Teilchengröße von 1 bis 15 nm, bei dem ein Übergangsmetallsalz wie PdCl₂, Pd(OAc)₂, Pd(acac)₂, Ni(OAc)₂, Fe(acac)₂, Fe(OAc)₃, PtCl₂, Pt(OAc)₂, RhCl₃, Rh(OAc)₃, Co(OAc)₂, Cu(OAc)₂, AgOAc oder Ag₂CO₃ in polaren Lösungsmitteln wie organischen Carbonaten, Carbonsäureamiden, Schwefelsäureamiden oder Harnstoffderivaten, vorzugsweise in Propylencarbonat, mit einem Alkohol, wie Isopropanol oder Methanol, reduziert wird.

Metallkolloide aus Edelmetallen wie Palladium werden in großem Umfang als Katalysatoren eingesetzt. Hier sind besonders geringe Teilchengrößen der Metallkolloid-Partikel wünschenswert, da die zur Verfügung stehende Oberfläche des Katalysators umgekehrt proportional zum Teilchendurchmesser ansteigt. Die Aktivität des Katalysators steht daher meist in direktem Zusammenhang mit der Größe der katalytisch aktiven Metallpartikel. Das Metallkolloid kann in freier, ungeträgerter Form eingesetzt werden. Die Abtrennung des Metallkolloids von der Produktlösung erfolgt dann beispielsweise durch Membranfiltration. Das Metallkolloid kann aber auch auf einem Katalysatorträger fixiert eingesetzt werden.

H. Bönnemann et al., angewandte Chemie 103 (1991), Seite 1344 bis 1346 erwähnen die Verwendung von trägergebundenen Metallkolloiden als Katalysatoren für die Hydrierung ungesättigter Verbindungen wie Kohlenmonoxid, C-C-, C-O-, C-N-Mehrfachbindungssystemen sowie für die Hydrierung aromatischer Verbindungen und die Verwendung der freien Pd- und Ni-Kolloide als Katalysatoren zur selektiven Hydrierung von Naturstoffen wie Sojabohnenöl.

Um als Katalysator eingesetzt werden zu können, muss das Metallkolloid in der Reaktionsumgebung stabil sein. Dies ist bei Hydrierungen organischer Verbindungen in flüssiger Phase unproblematisch. Sind jedoch in der Reaktionsumgebung Sauerstoff oder andere oxidierende Reagenzien zugegen, wie bei Partialoxidationen organischer oder anorganischer Verbindungen mit Sauerstoff oder Wasserstoffperoxid, so kann es zu einer Zersetzung des das Kolloid stabilisierenden Polymers kommen. Der oxidative Abbau des Stabilisators führt zu einer Zersetzung des Kolloids, wodurch das Kolloid im Reaktionsraum sedimentiert und dadurch katalytisch inaktiv wird.

DE-A 44 12 463 offenbart ein Verfahren zur Beschichtung elektrisch nicht leitender Substratoberflächen mit metallischen Überzügen, bei dem die Substratoberflächen mit einer Palladiumkolloid-Lösung behandelt werden. Das Palladiumkolloid ist durch Schutzkolloide wie Polyvinylpyrrolidon, Polyvinylpyridin, Polyvinylmethylketon, Polyvinylalkohol, Polyvinylacetat, Polyacrylsäure, Polyethylenglykol, Polyimin oder Alkyl- und Hydroxyalkylcellulose stabilisiert. Die Palladiumkolloid-Lösung kommt bei dem Beschichtungsverfahren intensiv mit Sauerstoff in Kontakt. Um die Oxidationsempfindlichkeit der Kolloide herabzusetzen, werden gemäß der Lehre dieser Schrift der Palladiumkolloid-Lösung Reduktionsmittel wie Metallhypophosphite- und phosphite, Alkalimetallborhydride, Monoalkylaminborane, Dialkylaminborane, Trialkylaminborane, Ascorbinsäure, Hydrazin, Hydroxylamin oder Formaldehyd zugegeben. Diese werden anstelle des stabilisierenden Polymers durch den Sauerstoff oxidiert. Für das dort beschriebene elektrochemische Verfahren mag diese Lösung des Problems der Oxidationsempfindlichkeit der eingesetzten Metallkolloide geeignet sein. Will man an dem Kolloid jedoch katalytische Oxidationsreaktionen durchführen, so stört die Gegenwart eines Reduktionsmittel den Reaktionsverlauf erheblich.

Besonders aggressive oxidierende Bedingungen werden bei der Direktsynthese von Wasserstoffperoxid aus den Elementen angetroffen. Hier wirken der im Reaktionsmedium gelöste Sauerstoff und das gebildete Wasserstoffperoxid oxidierend. Diese Oxidationsmittel wirken in Gegenwart der üblicherweise zur Stabilisierung des Wasserstoffperoxids eingesetzten Halogenidionen besonders aggressiv.

Aufgabe der Erfindung ist, ein oxidationsunempfindliches Edelmetallkolloid bereitzustellen, das als Katalysator für Oxidationsreaktionen eingesetzt werden kann.

Gelöst wird die Aufgabe durch ein oxidationsunempfindliches polymerstabilisiertes Edelmetallkolloid aus Edelmetallpartikeln, die an ihrer Oberfläche ein oder mehrere oxidationsunempfindliche, Sulfonsäuregruppen oder Phosphonsäuregruppen enthaltende Polymere koordinativ gebunden aufweisen, wobei die Polymere ausgewählt sind aus der Gruppe bestehend aus sulfoniertem, teilfluoriertem oder fluoriertem Polystyrol, sulfonierten, teilfluorierten oder fluorierten Alkylen/Styrol-Copolymeren, sulfonierten, perfluorierten Alkylen/Alkylenoxid-Copolymeren, sulfoniertem Polystyrol, sulfonierten Polyarylenoxiden, sulfoniertem Polyarylenethersulfonen, sulfonierten Polyarylenetherketonen, sulfoniertem Polyphenylen, sulfoniertem Polyphenylensulfid und phosphonierten Arylenoxiden und phosphonierten Polybenzimidazolen, wobei die genannten Polymere weitere Substituenten aufweisen können.

Geeignete sulfonierte teilfluorierte Alkylen/Styrol-Copolymere weisen beispielsweise die nachstehenden Strukturmotive (I) oder (II) auf:

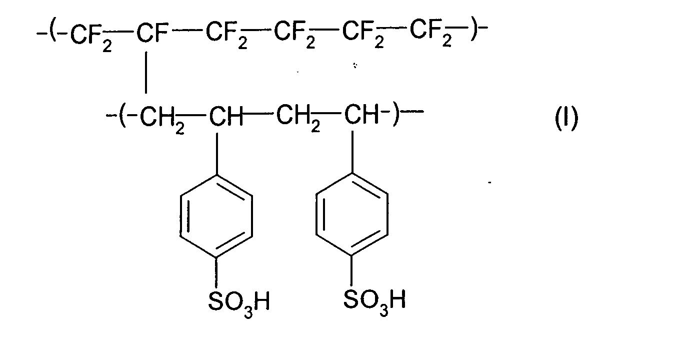

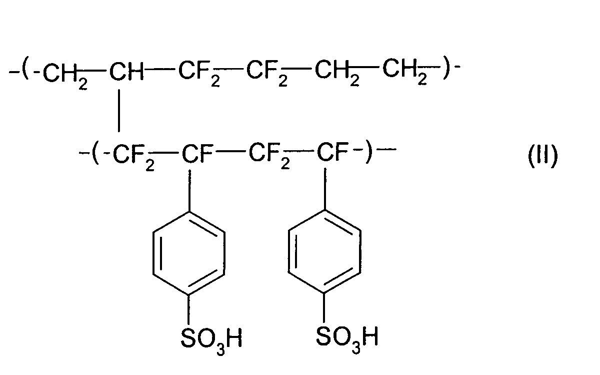

Polymere dieser Art sind beispielsweise unter den Namen Raipore® R-1010 der Pall Rai Manufacturing Corporation, USA bzw. Raymion® der Chlorine Engineering Corporation, Japan, erhältlich.

Geeignetes sulfoniertes fluoriertes Polystyrol ist beispielsweise sulfoniertes Polytetrafluorstyrol mit dem nachstehenden Strukturmotiv (III):

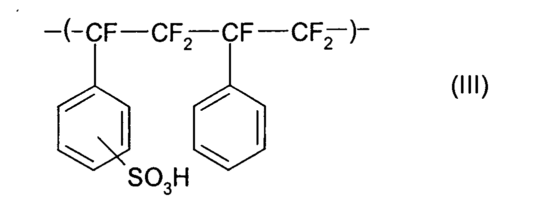

Geeignetes sulfoniertes fluoriertes Polystyrol kann auch vernetzt sein, entsprechend dem nachstehenden Strukturmotiv (IIIa):

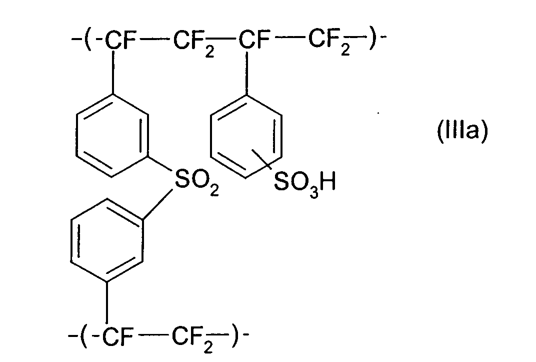

Geeignete perfluorierte Alkylen/Alkylenoxid-Copolymere weisen beispielsweise die nachstehenden Strukturmotive (IV) und (V) auf:

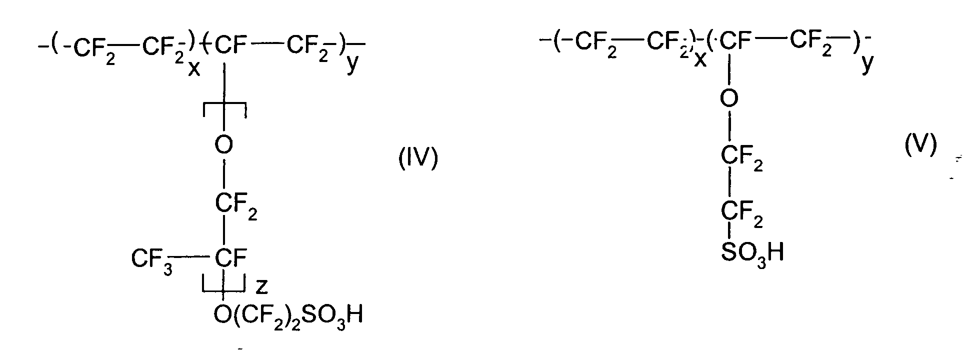

Derartige Polymere sind beispielsweise unter den Namen Nafion® von Dupont, USA bzw. Aciplex-S® von Asahi Chemicals, Japan, erhältlich.

Geeignete sulfonierte Polyarylenoxide weisen beispielsweise repetitive Einheiten der nachstehenden Formeln (VI) auf:

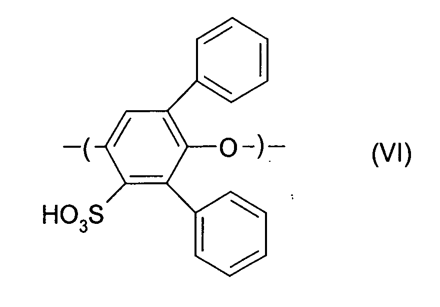

Geeignete Polyarylethersulfone weisen beispielsweise repetitive Einheiten der nachstehenden Formeln (VII) und (VIII) auf:

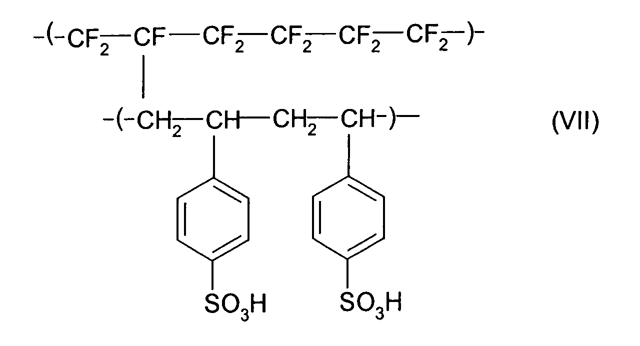

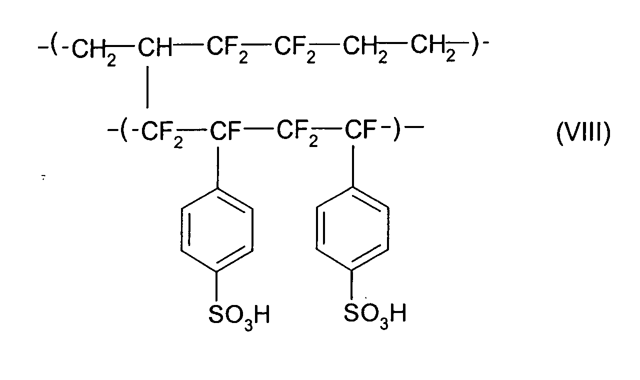

Geeignete sulfonierte Polyarylenetherketone weisen beispielsweise repetitive Einheiten der nachstehenden allgemeinen Formel (IX) auf:

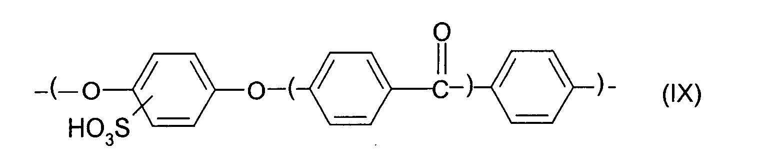

Geeignete phosphonierte Arylenoxide weisen beispielsweise repetitive Einheiten der nachstehenden Formeln (Xa) - (Xc) auf:

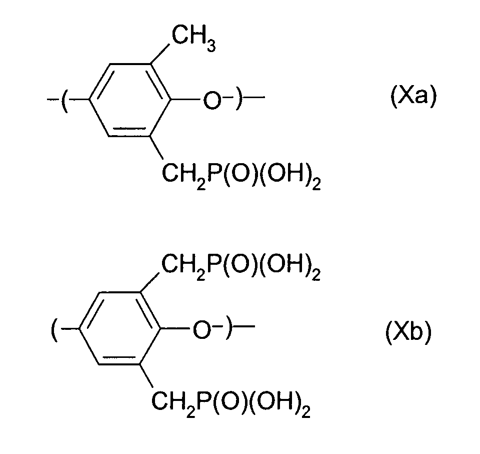

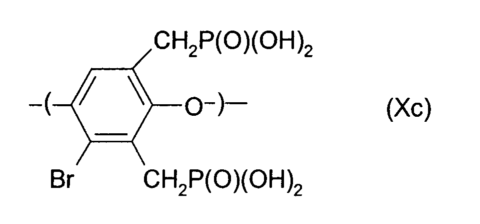

Geeignete oxidationsunempfindliche stabilisierende Polymere sind ferner Polyphenylen, Polyphenylensulfid, sulfoniertes Polystyrol, das auch mit Divinylbenzol vernetzt sein kann, sowie sulfonierte lineare oder vernetzte Phenol-Formaldehyd-Harze.

Der vorstehend verwendete Begriff "Strukturmotiv" bezeichnet beispielhafte, repräsentative Ausschnitte aus der Gesamtstruktur der erfindungsgemäß eingesetzten Polymere.

Bevorzugte oxidationsunempfindliche, stabilisierende Polymere sind die genannten sulfonierten teilfluorierten, fluorierten und perfluorierten Polymere sowie die Phosphonsäurengruppen enthaltenden Polymere. Besonders bevorzugt sind perfluorierte Alkylen/Alkylenoxid-Copolymere, beispielsweise die unter dem Namen Nafion® erhältlichen Polymere.

Die Herstellung des Edelmetall-Kolloids erfolgt durch Umsetzung einer Lösung des oder der Edelmetallsalze mit einem oder mehreren Reduktionsmitteln in Gegenwart des oder der oxidationsunempfindlichen stabilisierenden Polymere. Hierzu wird beispielsweise eine Lösung des Reduktionsmittels mit einer Lösung des Edelmetallsalzes, wobei letztere auch das stabilisierende Polymer enthält, gemischt. Als Edelmetallsalze können alle durch Reduktionsmittel zu den metallischen Edelmetallkolloiden reduzierbare lösliche Salze eingesetzt werden. Beispiele sind die Chloride, Sulfate, Nitrate, Phosphate, Pyrophosphate, Cyanide und Fluoroborate des Edelmetalls, ferner dessen organische Salze, wie die Salze von Ameisen-, Essig-, Bernstein-, Äpfel-, Milch-, Zitronen-, Ascorbin-, Oxal-, Benzoeund Vanillinsäure, sowie Komplexverbindungen wie Amin- und Halogenokomplexe des Edelmetalls und Komplexe des Edelmetalls mit organischen Komplexbildnern.

Bevorzugte Edelmetalle sind Palladium, Platin, Rhodium, Ruthenium und Iridium.

Besonders bevorzugte Edelmetalle sind Palladium und Platin, die im allgemeinen als Palladium- bzw. Platin(II)salz eingesetzt werden. Bevorzugt sind die Nitrate und Salze von Carbonsäuren, wie die Acetate, von Palladium(II) bzw. Platin(II).

Es können auch Lösungen mehrerer verschiedener Edelmetallsalze umgesetzt werden.

Um Edelmetallkolloide mit weiteren metallischen Komponenten zu erhalten, können entsprechende Metallsalze von einem oder mehreren weiteren Metallen der III. und IV. Hauptgruppe wie Gallium, Germanium, Zinn und Blei sowie von Übergangsmetallen wie Rhenium, Kupfer, Nickel, Kobalt, Mangan, Chrom und Molybdän mit eingesetzt werden.

Geeignete Reduktionsmittel sind Alkohle wie Ethanol oder Aldehyde wie Formaldehyd.

Die Herstellung der Edelmetallkolloide kann in polaren oder unpolaren Lösungsmitteln erfolgen. Es kann beispielsweise in einem wässrigen Lösungsmittel gearbeitet werden, dass das Reduktionsmittel gelöst enthält. Es kann aber auch in nicht wässrigen Lösungsmitteln, die das Reduktionsmittel enthalten, gearbeitet werden. Beispiele sind Alkohole, Essigsäure, THF, Ether und Formaldehyd. In einer bevorzugten Ausführungsform der Erfindung wird in dem Reduktionsmittel als Lösungsmittel gearbeitet. Bevorzugte Reduktionsmittel, die gleichzeitig auch Lösungsmittel sein können, sind Ethanol und Formaldehyd.

Die Reduktion des Edelmetallsalzes erfolgt im allgemeinen durch Rühren der Lösung, die das Edelmetallsalz, gegebenenfalls das weitere Metallsalz, das stabilisierende Polymer sowie das Reduktionsmittel enthält, bei einer Temperatur von 0 bis 95 °C, bevorzugt von 30 bis 90 °C, über einen Zeitraum von 10 bis 200 min, bevorzugt 30 bis 150 min.

Aus der so hergestellten Edelmetallkolloid-Lösung kann das kolloidale Edelmetall durch Zusatz eines sehr unpolaren Lösungsmittels gefällt und anschließend isoliert werden. Geeignete sehr unpolare Lösungsmittel sind beispielsweise aliphatische, aromatische oder cycloaliphatische Kohlenwasserstoffe mit 5 bis 10 C-Atomen. Insbesondere hat sich der Zusatz von Petrolether als Fällungsmittel bewährt. Das gefällte Edelmetallkolloid kann durch übliche mechanische Abtrennverfahren isoliert werden, beispielsweise durch Filtrieren oder Zentrifugieren. Auch in Substanz sind die erfindungsgemäßen polymerstabilisieren Edelmetallkolloide luftstabil, so dass sie nach der Isolierung an der Luft getrocknet werden können.

Das erfindungsgemäße polymerstabilisierte Edelmetallkolloid kann als Katalysator eingesetzt werden. Dazu kann die bei der Reduktion des Edelmetallsalzes erhaltene Edelmetallkolloid-Lösung direkt eingesetzt werden. Das isolierte Edelmetallkolloid kann auch in einem flüssigen Medium zu einer Edelmetallkolloid-Lösung redispergiert werden. Das erfindungsgemäße Edelmetallkolloid kann ferner auf einen Träger aufgebracht werden.

Typischerweise weisen die gebildeten Edelmetallpartikel Teilchendurchmesser im Bereich von 1 bis 10, bevorzugt von 1 bis 5 nm, auf.

Das erfindungsgemäße polymerstabilisierte Edelmetallkolloid kann zu einem Heterogenkatalysator weiterverarbeitet werden, indem es auf einen Träger aufgebracht wird. In Frage kommen alle üblichen Träger, wie keramische Oxide, bevorzugt Al₂O₃, SiO₂, ZrO₂, TiO₂ und deren Mischoxide, Kohlenstoff, Zeolithe und Silikalite. Die Träger können Promotoren zur Erhöhung der katalytischen Aktivität und deren Sinterstabilität enthalten.

Das Edelmetallkolloid kann aus Lösung auf den Träger aufgebracht werden. Dazu wird der Träger mit der Edelmetallkolloid-Lösung beispielsweise durch Besprühen des Trägers oder durch Tränken des Trägers in der Lösung imprägniert. Nach dem Imprägnieren kann sich ein Trocknungsschritt anschließen. Das Edelmetallkolloid kann aber auch durch Trockenvermischung des in Substanz isolierten Edelmetallkolloids mit dem Träger auf diesen aufgebracht werden.

Das Gewichtsverhältnis Edelmetall stabilisierendes Polymer beträgt während der Herstellung der Edelmetallkolloide im allgemeinen von 60 : 1 bis 1: 60, bevorzugt von 30:1 bis 1: 30.

Das erfindungsgemäße Edelmetallkolloid kann als Katalysator für Oxidationsreaktionen verwendet werden. Dabei kann das Edelmetallkolloid als Lösung oder aber als Heterogenkatalysator auf einem Träger eingesetzt werden. Eine bevorzugte Oxidationsreaktion ist die Synthese von Wasserstoffperoxid aus den Elementen, sowohl nach dem Anthrachinonverfahren oder einem analogen Verfahren als auch durch Direktsynthese, d.h. durch direkte Umsetzung von Sauerstoff und Wasserstoff an dem Edelmetallkolloid in einem flüssigen oder gasförmigen Medium.

Das erfindungsgemäße Edelmetallkolloid kann ferner als Elektrokatalysator in Brenstoffzellen, insbesondere in PEM-Brennstoffzellen oder in DMFC-Brennstoffzellen, verwendet werden. Dazu wird das Edelmetallkolloid, bevorzugt ein erfindungsgemäßes Platinkolloid, mit Ruß (z. B. Vulcan X C 72 von Cabot, Inc.) vergesellschaftet und als Elektrokatalysator eingesetzt.

Die Erfindung wird durch die nachstehenden Beispiele näher erläutert:

### Beispiele

### Beispiel 1

In einem 500 ml-Vierhalskolben werden 750 mg Nafion® als 5 gew.-%ige ethanolische Lösung und 75 ml Ethanol vorgelegt und 75 mg Palladium als Pd(NO₃)₂ gelöst in 25 ml Ethanol zugegeben. Die erhaltene Lösung ist zunächst hellbraun gefärbt und wasserklar. Bei Raumtemperatur wird 4 Stunden lang weitergerührt. Nach Ablauf dieser Zeit ist die Lösung schwarz und durch das gebildete Palladiumkolloid eingetrübt.

Die Lösung wird mit Ethanol auf 125 ml aufgefüllt. Sie enthält 0,6 g Pd/l. Zur Stabilisierung der kolloidalen Lösung wird das Volumen durch Zusatz von destilliertem Wasser verdoppelt und Ethanol auf dem Wasserbad langsam abdestilliert. Dadurch wird das Palladiumkolloid in eine wässrige, stabile Lösung überführt.

### Vergleichsbeispiel 1

Zum Vergleich mit dem Nafion®-stabilisierten Palladiumkolloid wird ein in der Literatur häufig beschriebenes PVP-stabilisiertes Palladiumkolloid hergestellt. Dazu werden in einem 2 1 Kolben 50 ml einer wässrigen Pd(NO₃)₂-Lösung mit einem Palladiumgehalt von 3 g und 400 ml Wasser vorgelegt. Zu dieser Lösung werden 50 ml einer wässrigen Lösung von 3 g Polyvinylpyrrolidon zugegeben. Anschließend werden 500 ml Ethanol zugesetzt und wird die noch klare Lösung auf Siedetemperatur aufgeheizt. Anschließend wird noch 3 Stunden lang unter Rückfluß weitergerührt. Es wird abkühlen gelassen, das so erhaltene Sol mit Wasser auf 1 aufgefüllt und Ethanol auf dem Wasserbad langsam abdestilliert. Anschließend wird mit Wasser auf 11 aufgefüllt.

### Beispiel 2

Zum Nachweis der Oxidationsstabilität wird 1 ml der gemäß Beispiel 1 hergestellten Nafion®-stabilisierten Palladiumkolloid-Lösung mit ca. 2 ml 30 gew.-%iger H₂O₂-Lösung versetzt. Unmittelbar nach Zusatz von H₂O₂ setzt eine heftige Gasentwicklung durch Zersetzung des Wasserstoffperoxids zu Wasser und Sauerstoff ein. Nach Abschluss der Zersetzungsreaktion liegt das Nafion®-stabilisierte Palladiumkolloid unverändert kolloidal in der Lösung verteilt vor.

### Vergleichsbeispiel 2

Zum Vergleich wird 1 ml der gemäß dem Vergleichsbeispiel 1 hergestellten PVPstabilisierten Palladiumkolloid-Lösung mit ca. 2 ml 30 gew.-%iger H₂O₂-Lösung versetzt. Nach Abklingen der Gasentwicklung liegt das Palladiumkolloid in aggregierter Form am Boden des Testgefäßes vor.

## Patentansprüche

1. Oxidationsunempfindliches polymerstabilisiertes Edelmetallkolloid aus Edelmetallpartikeln, die an ihrer Oberfläche ein oder mehrere oxidationsunempfindliche, Sulfonsäuregruppen oder Phosphonsäuregruppen enthaltende Polymere koordinativ gebunden aufweisen, wobei die Polymere ausgewählt sind aus der Gruppe bestehend aus sulfoniertem, teilfluoriertem oder fluoriertem Polystyrol, sulfonierten, teilfluorierten oder fluorierten Alkylen/Styrol-Copolymeren, sulfonierten, perfluorierten Alkylen/Alkylenoxid-Copolymeren, sulfoniertem Polystyrol, sulfonierten Polyarylenoxiden, sulfonierten Polyarylenethersulfonen, sulfonierten Polyarylenetherketonen, sulfoniertem Polyphenylen, sulfoniertem Polyphenylensulfid und phosphonierten Arylenoxiden und phosphonierten Polybenzimidazolen, wobei die genannten Polymere weitere Substituenten aufweisen können.

2. Edelmetallkolloid nach Anspruch 1, **dadurch gekennzeichnet, dass** das Edelmetall Palladium oder Platin ist.

3. Edelmetallkolloid-Lösung, enthaltend ein Edelmetallkolloid nach Anspruch 1 oder 2.

4. Edelmetallhaltiger Heterogenkatalysator, enthaltend ein Edelmetallkolloid nach Anspruch 1 oder 2 auf einem Träger.

5. Edelmetallhaltiger Heterogenkatalysator nach Anspruch 4, **dadurch gekennzeichnet, dass** der Träger ausgewählt ist aus der Gruppe bestehend aus Al₂O₃, SiO₂, ZrO₂, TiO₂ und deren Mischoxiden, Kohlenstoff, Zeolithen und Silikaliten.

6. Verfahren zur Herstellung einer Edelmetallkolloid-Lösung, bei dem eine Lösung eines oder mehrerer Edelmetallsalze mit einem oder mehreren Reduktionsmitteln in Gegenwart eines oder mehrerer oxidationsunempfindlicher stabilisierender Polymere, ausgewählt aus der Gruppe bestehend aus sulfoniertem, teilfluoriertem oder fluoriertem Polystyrol, sulfonierten, teilfluorierten oder fluorierten Alkylen/Styrol-Copolymeren, sulfonierten, perfluorierten Alkylen/Alkylenoxid-Copolymeren, sulfoniertem Polystyrol, sulfonierten Polyarylenoxiden, sulfonierten Polyarylenethersulfonen, sulfonierten Polyarylenetherketonen, sulfoniertem Polyphenylen, sulfoniertem Polyphenylensulfid und phosphonierten Arylenoxiden und phosphonierten Polybenzimidazolen, wobei die genannten Polymere weitere Substituenten aufweisen können, umgesetzt wird.

7. Verwendung des Edelmetallkolloids nach Anspruch 1 oder 2, der Edelmetallkolloid-Lösung nach Anspruch 3 oder des Heterogenkatalysators nach Anspruch 4 oder 5 als Katalysator für katalytische Oxidationsreaktionen.

8. Verwendung nach Anspruch 7 für die Synthese von Wasserstoffperoxid.

9. Verwendung des Edelmetallkolloids nach Anspruch 1 oder 2 als Elektrokatalysator in Brennstoffzellen.
